# EUROPEAN PATENT APPLICATION

(11) **EP 0 626 659 A1**
(43) Date of publication of application: **30.11.1994**
(21) Application number: 94303756.4
(22) Date of filing: 25.05.1994
(51) Int. Cl.: G06F 15/78

(54) **Apparatus, system and method for distributed processing**

(30) Priority: 28.05.1993 US 68909
(71) Applicant: TEXAS INSTRUMENTS INCORPORATED, Dallas Texas 75265 (US)
(72) Inventor: Mahant-Shetti, Shivaling, Richardson, Texas 75081 (US); Pawate, Basavaraj, Dallas, Texas 75243 (US); Doddington, George R., McLean, Virginia 22101 (US); Smith, Derek, Lafayette, LA 70503 (US)
(74) Representative: Blanco White, Henry Nicholas

(57) **Abstract**

An active memory device 14 is provided which includes a data memory 20 including rows and columns of storage locations for holding broad data and computational results. A broadcast memory 22 is also provided which includes rows and columns of storage locations for holding control instructions and computational arguments. A data path operable to apply selected computational arguments received from broadcast memory 22 to selected words of raw data received from data memory 20 and provide computational results in response. Control circuitry 24 is operable in response to control instructions received from broadcast memory 22 to control the transfer of the selected words of raw data and results between the data memory 20 and the data path 26, the transfer of the selected arguments from the broadcast memory 22 to the data path 26, and the application of the selected arguments to the selected words of raw data by data path 26.

## Description

### TECHNICAL FIELD OF THE INVENTION

The present invention relates in general to data processing and in particular to apparatus, systems and methods for distributed processing.

### BACKGROUND OF THE INVENTION

As the tasks computing systems are required to perform increase in complexity, the burdens on the central processing unit (CPU), the size of the system memory, and the traffic on the system address and data buses all correspondingly increase. In particular, many types of tasks associated with matrix mathematics, speech synthesis, image signal processing, and digital signal processing are computationally intensive, often requiring the execution of a large number of basic arithmetic operations before a final result is obtained. For example, a typical matrix multiplication may require the performance of a substantial number of multiplications and additions, depending on the sizes of the matrices involved. In addition, the resulting intermediate sums and products must be stored and retrieved as the operations proceed. Thus, the CPU becomes burdened not only with the task of performing all arithmetic operations but also with the task of controlling the transfer of data to and from memory. The memory in turn must be large enough to handle the initial raw data and all the intermediate results. Finally, the traffic on the address and data buses substantially increases as data and results are exchanged between the memory and the CPU.

Thus, the need has arisen for apparatus, systems and methods which more efficiently handle computationally intensive applications. Such apparatus, systems and methods, should ease CPU task burdens, minimize the amount of memory required and efficiently use bus bandwidth. Further, such apparatus, systems and methods should be compatible with currently available device and system configurations.

### SUMMARY OF THE INVENTION

According to the invention, an active memory device is provided which includes a data memory including rows and columns of storage locations for holding raw data and computational results. A broadcast memory is further provided which includes rows and columns of storage locations for holding control instructions and computational arguments. A data path is provided which is operable to supply selected computational arguments received from the broadcast memory to selected words of raw data received from the data memory and provide computational results in response. Control circuitry is additionally provided which is operable in response to control instructions received from the broadcast memory to control the transfer of selected words of raw data and the results between the data memory and the data path, the transfer of the selected arguments from the broadcast memory to the data path, and the application of the selected arguments to the selected words of raw data by the data path.

Active memory devices embodying concepts of the present invention, as well as systems and methods using such active devices, provide significant advantages. Such devices, systems and methods can be used to ease task burdens by performing data processing operations independent of the corresponding central processing unit. Apparatus, systems and methods embodying the present invention allow efficient use of system data and address busses by reducing the data and address traffic between the central processing unit and memory.

### BRIEF DESCRIPTION OF THE DRAWINGS

For a more complete understanding of the present invention, and the advantages thereof, reference is now made to the following descriptions taken in conjunction with the accompanying drawings, in which:
FIGURE 1 is a block diagram of a data processing system embodying concepts of the present invention; and
FIGURE 2 is a functional block diagram illustrative of one embodiment of the active memory devices shown in FIGURE 1.

### DETAILED DESCRIPTION OF THE INVENTION

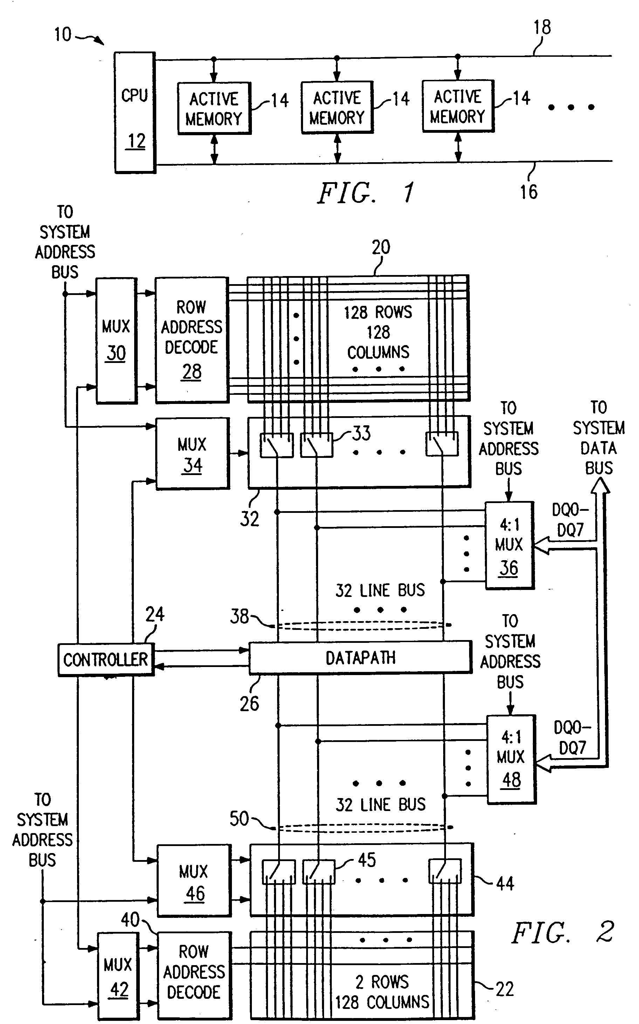

The preferred embodiment of the present invention and its advantages are best understood by referring to FIGURES 1-2 of the drawings, like numerals being used for like and corresponding parts of the various drawings.

FIGURE 1 depicts a processing system 10 employing an architecture embodying concepts of the present invention. Processing system 10 includes a central processing unit (CPU) 12 coupled to a number of active memory devices 14 by a data bus 16 and an address bus 18. In the architecture of FIGURE 1, the primary system control and computational capabilities are provided by CPU 12 which may be for example a general purpose microprocessor, a microcontroller, a digital signal processor, or a graphics processor. In addition to providing the data and instruction storage required for general system operation, active memory devices 14 provide for the distributed computing and data handling required for problem solving operations, as discussed in detail below.

In the depicted embodiment of system 10, data intensive calculations, especially repetitive calculations such as those typically required during matrix operations and speech synthesis, are distributedly performed using the active memory devices 14. CPU 12 for example, may load a each active memory 14 device with a subset of the raw data required for a given problem. Each active memory 14 then proceeds to perform a given set of operations on the corresponding subset of data while the CPU 12 is free to simultaneously perform other tasks. When the tasks distributed to the active memories 14 are complete, CPU 12 retrieves the results to complete the solution to the problem. Preferably, each active memory 14 in system 10 has a pin configuration compatible with the pin configuration of a chosen conventional ("inactive") memory unit (for example a 28-pin pinout). In this fashion, active memories 14 and conventional inactive memories can be interchanged on a given board or other supporting structure.

In addition to minimizing the computation burdens imposed on CPU 12, distributed processing using active memory devices 14 allows for more efficient utilization of data bus 16 and address bus 18. In essence, active devices 14 compress or reduce data such that the exchange of raw data and intermediate results on data bus 16 and the corresponding transmission of addresses on address bus 18 are substantially reduced.

FIGURE 2 is a functional block diagram of an illustrative active memory 14 embodying the concepts of the present invention. Active memory 14 may be constructed as a single chip or module (a "device") which includes a data random access memory 20 (RAM), a broadcast RAM 22, a controller 24 and datapath 26. In a single chip embodiment, data RAM 20 and broadcast RAM 22 may be fabricated in a standardized configuration for a given set of devices while controller 24 and datapath 26 are customized to meet the operational requirements for a given device or subset of devices.

Data RAM 20 may be either a static random access memory (SRAM) or a dynamic random access memory array (DRAM). In FIGURE 2, RAM 20 is depicted as a 2k x 8 memory arranged as 128 rows and 128 columns of RAM cells. It should be noted that in addition to the configuration shown in FIGURE 2, any one of a number of alternate RAM architectures may also be used, as is understood in the art. Associated with data RAM 20 is circuitry for reading and writing data to and from selected cells in the array including row address circuitry 28, a row address multiplexer 30, first stage decoding (column address) circuitry 32, column address multiplexer 34 and input/output circuitry 36. Multiplexer 30 passes address bits to the row address circuitry 28 from either system address bus 18 or from the controller 24. The selection can be made in response to either a discrete signal or the value of the address itself. Similarly, multiplexer 34 passes address bits from either the address bus 18 or from controller 24. Multiplexers 30 and 34 along with input/output circuitry 36 allow for the transfer of bits of data into the cells of data RAM either from CPU 12 using data bus 16 and address bus 18 or from datapath 26 using internal bus 38.

In the embodiment of FIGURE 2, first stage decoder 32 multiplexes each set of four adjacent bitlines to form an internal bus 38 which is 32 bits wide (if for example a 256 column memory architecture was used, then the internal bus would be 64 bits wide). In the illustrated embodiment, I/O circuitry 36 includes a four to one multiplexer which selects, in response from address bits from address bus 18, one of four sets of eight adjacent bits on 32-bit internal bus 38 for communication to the system data bus 16. It should be noted that in alternate embodiments the configuration of input/output circuitry may vary depending on such factors as the width of internal bus 38 and the number of lines (bits) communicating with system data bus 16.

Broadcast RAM 22 may also be either static or dynamic and is similarly associated with circuitry for writing and reading data into and out of its memory cells array including row address circuitry 40, row address multiplexer 42, first stage (column) decoding circuitry 44, multiplexer 46 and input/output circuitry 48. In FIGURE 2, broadcast RAM is organized as 2 rows and 128 columns, although alternate row/column organizations may be used in other embodiments. The read/write circuitry associated with broadcast RAM 22 operates similar to the read/write circuitry associated with data RAM 20. First stage decoder circuitry 44 in the illustrated embodiment performs 4:1 multiplexing on each four adjacent columns of the 128 columns memory cells in broadcast RAM 22 with selected 32 bits coupled to datapath 26 via a second internal bus 50. Multiplexers 42 and 46 selectively pass address bits from either system address bus 18 or from controller 24. Thus, multiplexers 42 and 46 along with input/output circuitry 48 allow for the transfer of data into the cells of broadcast RAM 26 from either CPU 12 via or from controller 24 through datapath 26.

As with the corresponding circuitry associated with data RAM 20, the specific configurations of row address circuitry 40, multiplexers 42 and 46, first stage decode circuitry 44, and input/output circuitry 48 will vary based on such factors as the numbers of rows and columns in the cell array of broadcast RAM 22, the width of internal bus 50, the number of bits being received from the system address bus 18 and the number of bits (lines) communicating with the system data bus 14. The coupling of data bus 16 with input/output circuitry 36 associated with data RAM 20 and input/output circuitry 48 associated with broadcast RAM 22 is preferably made through a single set of pins (D∅-D7) to provide compatibility with conventional memory pinouts. Similarly, the coupling of the read/write circuitry associated with both data RAM 20 and broadcast RAM 22 may be made through a single set of pins (also not shown). Since active memories 14 are part of the system memory, it is preferable that memories 14 take on the characteristics of memory chips. In other words, Memories 14 should be efficient like memory chips, small in size and relying on a minimum number of data and address pins which are compatible with the pin configurations of conventional ("inactive") memory chips.

Datapath 26 under the control of controller 24 routes data on internal bus 38 and 50 and provides the desired distributed computational capabilities. Datapath 26 may be implemented in random logic, in programmable gate array circuitry, or in programmable logic array circuitry, as required to customize the chip or unit to perform the desired computational functions. For example, datapath 26 may include adders and multipliers to implement the matrix multiplier example or comparitor circuitry in speech applications. Further, both controller 24 and datapath 26 may together be implemented in digital signal processing circuitry, such as that found in the Texas Instruments TI-320 family of digital signal processors.

In the preferred embodiment of system 10, each Broadcast RAM 22 is placed at the highest address space available for the corresponding number of address bits received by active memories 14 from system address bus 18 This allows each broadcast RAM 22 to be written to or read from without a chip select signal. Further, all the broadcast RAMs 22 of the active memories 14 in system 10 can be accessed simultaneously. The broadcast Ram 22 for a given memory 14 receives instructions and data from CPU 12 on data bus 16 for use by controller 26 in carrying out a selected computation.

In a typical computation, CPU 12 writes data into the data Ram 20 of each active memory 14 from data bus 16. Typically each data RAM 20 holds a different subset of an overall set of data being operated on. For example, in the case of a matrix multiplication, each data RAM 20 might hold the data for a corresponding row in the matrices involved. A control sequence to be followed by each controller 24 is presented on data bus 16 while the high address bits are presented on address bus 18 such that the control sequence is written into each broadcast RAM 22. Similarly, at least one argument (vector) of the desired computation being performed by system 10 is written into each broadcast RAM 22. Typically, the same vector is written into all the broadcast RAMs 22 in system 10.

In one embodiment, a dummy location in the broadcast memory space initiates execution of the arguments by the controller 24 and datapath 26 of each active memory device 14. In particular, controller 24 causes datapath 26 to apply the arguments retrieved from the broadcast RAM 22 to each row of data from data RAM 20, as dictated by the control sequence. The results from applying the arguments to a given row of data in the respective data RAM 20 are written by controller 24 through datapath 26 back into one or two selected byte locations along the same row. Controller 24 cycles through all row addresses and through the all addresses to the 4 to 1 multiplexer of data RAM first stage decoder 32 such that all the data in the data RAM 20 has been operated on.

While the active memory devices are operating on the data previously written into each of the data RAMs 20, CPU 12 is freed to attend to other tasks. CPU 12 subsequently returns to retrieve the reduced (compressed) results from the data RAM 20 of each active memory 14 after the active memories indicate completion of the distributed computational tasks.

Although the present invention and its advantages have been described in detail, it should be understood that various changes, substitutions and alterations can be made herein without departing from the spirit and scope of the invention as defined by the appended claims.

## Claims

1. An active memory comprising:
a data memory including rows and columns of storage locations for holding data and results;
a broadcast memory including rows and columns of storage locations for holding control instructions and computational arguments;
a datapath operable to apply selected computational arguments received from said broadcast memory to selected raw data received from said data memory and provide computational results in response; and
control circuitry operable in response to control instructions received from said broadcast memory to control the transfer of said selected raw data and said results between said data memory and said datapath, the transfer of said selected arguments from said broadcast memory to said datapath, and the application of said selected arguments to said selected data by said datapath.

2. The active memory of Claim 1 and wherein said control circuitry includes:
a controller operable to interpret said control instructions and sequence said transfers and said application of said selected arguments.

3. The active memory of Claim 1 or Claim 2 and including data memory control circuitry for transferring said data and results between selected said locations in said data memory and said datapath under direction of said controller.

4. The active memory of Claim 1, Claim 2 or Claim 3 and including broadcast memory control circuitry for transferring said control instructions and computational arguments between selected locations in said broadcast memory and said datapath under direction of said controller.

5. The active memory of any preceding claim and wherein said control circuitry is further operable to direct application of said selected arguments to said selected data as said selected words sequentially retrieved by row and column from said data memory.

6. The active memory of Claim 5 wherein said controller is further operable to direct said results resulting from the application of said arguments to said data from a given said row in said data memory to be stored in said given row.

7. The active memory of any preceding claim and further comprising:
data memory input/output circuitry for allowing the transfer of said data and results between said data memory and an external bus.

8. The active memory of any preceding claim and further comprising:
broadcast memory input/output circuitry for allowing the transfer of said control instructions and computational arguments between said broadcast memory and an external bus.

9. The active memory device of any preceding claim wherein said active memory is constructed as a single unit, said single unit having a pin configuration compatible with a pin configuration of a selected inactive memory unit.

10. The active memory device of claim 3 or claim 4 or any of claims 5 to 9 in that they depend therefrom and wherein said data memory control circuitry or said broadcast memory control circuitry comprises:
row addressing circuitry for selecting in response to row address bits a said row said data memory containing selected said memory cells to be accessed; and
column addressing circuitry for selecting in response to column address bits said columns in said array of said data memory including said selected said memory cells, including a plurality of multiplexers, each said multiplexer selectively coupling a said column from a set of adjacent said columns in said array to said first internal bus.

11. The memory of Claim 10 wherein said row addressing circuitry further comprises multiplexing circuitry for selecting between row address bits presented by said controller and row address bits presented by an external address bus and said column addressing circuitry further comprises multiplexing circuitry for selecting between column address bits presented by said controller and column address bits presented by an external address bus.

12. The active memory of any of claims 3 to 11 and wherein said data memory control circuitry or said broadcast memory control circuit is coupled to an internal bus.

13. The active memory of claim 13, wherein said datapath is provided between internal busses.

14. A processing system incluning an active memory as claimed in any preceding claim.

15. A processing system as claimed in claim 14 and including:
a central processing unit;
an address bus coupled to said central processing unit;and
a data bus coupled to said central processing unit.

16. A method of distributed data processing in a data processing system including a central processing unit coupled to at least one active memory device comprising the steps of:
writing data into a first memory in the active memory device using the central processing unit;
writing control instructions and computational arguments into a second memory in the active memory device using the central processing unit;
applying computational arguments retrieved from the second memory to data retrieved from the first memory in accordance with control instruction from the second memory using computing circuitry in the active memory device;
storing results from the application of computational arguments to the data retrieved from the first memory in the first memory; and
reading the results from the first memory using the central processing unit.

17. The method of Claim 16, wherein said step of applying arguments comprises the step of applying the computational arguments to the data as the data is sequentially retrieved from the locations in the first memory and said step of storing comprises the step of storing each result in locations from which the data resulting in such result was retrieved.
